# EUROPEAN PATENT APPLICATION

(11) **EP 2 290 246 A1**
(43) Date of publication of application: **02.03.2011**
(21) Application number: 09169134.5
(22) Date of filing: 01.09.2009
(51) Int. Cl.: F16B 39/34

(54) **A threaded assembly, a nut member and a threaded cylindrical shaft for such assembly**

(71) Applicant: Slothco ApS, 3670 Veksø Sjælland (DK)
(72) Inventor: Sloth, Poul, 3670, Veksø Sjælland (DK)
(74) Representative: Høiberg A/S

(57) **Abstract**

The present invention concerns a threaded assembly comprising a cylindrical shaft (11) with an externally threaded portion and a nut member (2) having a bore with an internal thread corresponding to the external thread of the shaft, wherein the internal and/or the external thread is provided with an axially oriented retention means (3,12). The retention means preferably comprises a recess (12) accommodating an insert material (3), such as a deformable material.

## Description

The present invention relates to a threaded assembly with locking means, wherein the assembly comprises a cylindrical shaft with an externally threaded portion and a nut member having a bore with an internal thread corresponding to the external thread of the shaft.

A threaded assembly comprising a nut member and a bolt member having a cylindrical shaft with a threaded portion for engagement with an internally threaded bore in a nut member is well known. In order to prevent loosening of the nut relative to the threaded shaft, it is known to provide a deformable ring in an annular recess on the nut. An example of such lock nut is known from GB 2 441 338. Another example is known from GB 1,184,269 where an annular recess is provided in the inward facing side of the nut and wherein a ring of a resin composition is inserted to provide for a self-locking threaded fastener.

To avoid loosening other more complicated solutions are also known, but common for the known system is that they are not suitable for use in a threaded assembly smaller than a certain size.

By the invention it is realised that this drawback can be overcome by providing a threaded assembly comprising a cylindrical shaft with an externally threaded portion and a nut member having a bore with an internal thread corresponding to the external thread of the shaft, wherein the internal and/or the external thread is provided with an axially oriented retention means, such as a recess accommodating an insert of a strip of relatively softer material than the material of the nut member and the threaded shaft.

According to the invention there is provided a self-locking nut and bolt-like threaded assembly. The invention is advantageous as the production costs are low and since the threaded assembly according to the invention is suitable for threaded assemblies with very small diameter.

In an embodiment of the invention, both the shaft and the nut member is provided with a shaft and a nut recess, respectively, and the insert material is provided in one of said recesses, i.e. either the shaft recess or the nut member recess. Hereby, it is possible to feel each revolution of the nut or threaded shaft. This many be particularly advantageous in relation to a length-adjustable member such as lock pins of a tumbler lock as described in European patent application No. 09155136.6 (not yet published).

Preferably, the retention means comprises a material, which is a polymeric material, such as nylon or the like. Alternatively, the material may be an elastically deformable natural material such as rubber. Other suitable materials may also be used fulfilling the functional requirement of providing high friction between the two threaded members which are being assembled. By having an elastically deformable material, any small tolerance, i.e. slight oversize of the inner diameter of the bore relative to the outer diameter of the shaft, may be eliminated due to the elastic expansion of the deformable member.

Preferably, the recess is an axial groove expanding over the entire length of the threaded portion of the nut member and/or cylindrical shaft. The insert material may advantageously be a material strip which is sized to fit tightly into the recess.

In one embodiment, the shaft is provided with an axially oriented recess accommodating an insert material. In another embodiment, the nut member is provided with an axially oriented recess accommodating an insert material.

The invention is described in more detail in the following with reference to the accompanying drawings, in which:
- fig. 1: is a perspective view of a first embodiment of the invention;
- fig. 2: is a side view of a treaded shaft member according to this first embodiment;
- fig. 3: is an end view of the shaft;
- fig. 4: is a top view of same;
- fig. 5: is a perspective view of said threaded shaft member according to the first embodiment;
- fig. 6: is an end view of a nut member according to a second embodiment of the invention;
- fig. 7: is a cross-section view of this nut member;
- fig. 8: is an end view of same;
- figs. 9-11: are perspective view of said nut member according to the second embodiment;
- fig. 12: is a perspective view of an assembly according to the second embodiment of the invention;
- fig. 13: is a perspective view of an unassembled nut and bolt arrangement according to a third embodiment;
- fig. 14: is a perspective view of same when assembled;
- fig. 15: is a perspective view of an unassembled nut and bolt arrangement according to a fourth embodiment; and
- fig. 16: is a perspective view of same when assembled.

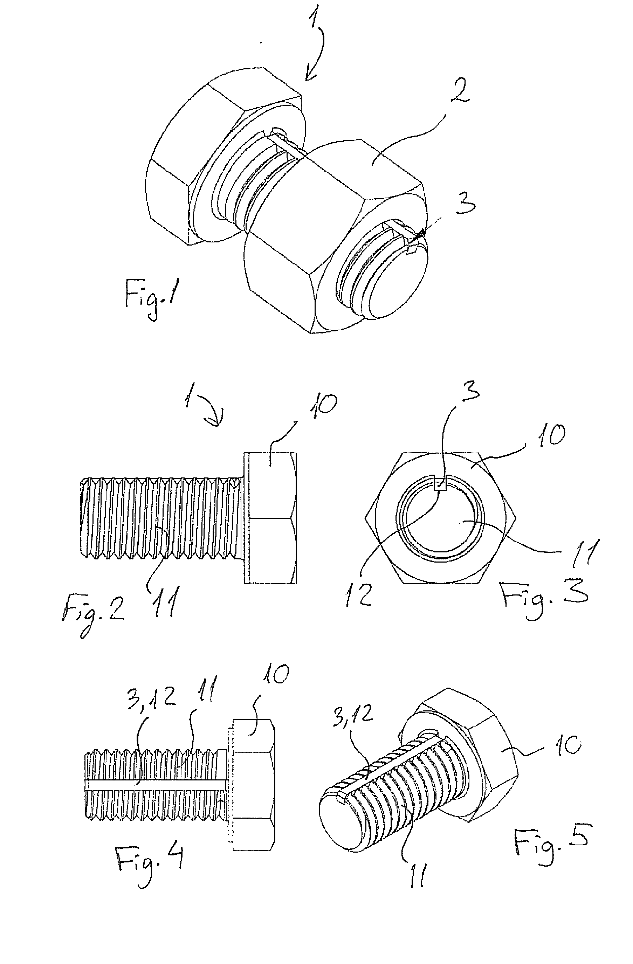

With reference to figures 1 to 5, a first embodiment of a self-locking treaded assembly according to the invention is shown. A threaded shaft member 1, such as a bolt, is in threading engaged by a nut member 2 which has a bore with an inner thread corresponding to the outer thread on the shaft 11. On the threaded shaft 11 there is provided an axially oriented recess 12 wherein an insert material strip 3 is provided. The shaft member 1 may be provided with a bolt head 10 on one of its distal ends.

The material strip 3 preferably fills out the recess 12 and extends from the recess 12 to about the top of the threading on the shaft 11 (see fig. 2). The material may be a deformable material such as nylon, rubber or any other polymeric material with resilient properties. However, the material may alternatively be a brittle material. When the nut member 2 is brought in engagement with the threaded shaft member 11, the inner threading of the nut member 2 engages the material strip which is deformed by the inner threading as the nut member 2 is screwed onto the shaft 11. The material strip 3 is thereby elastically and/or plastically deformed and engages firmly the inner threading on the nut member 2 so that the two assembled members are prevented from any relative movement due to potential small dimensional tolerances in the threads. Moreover, as the insert material strip has some spring back properties, this produces an elevated friction preventing the nut member 2 from being loosened when mounted on the shaft 11.

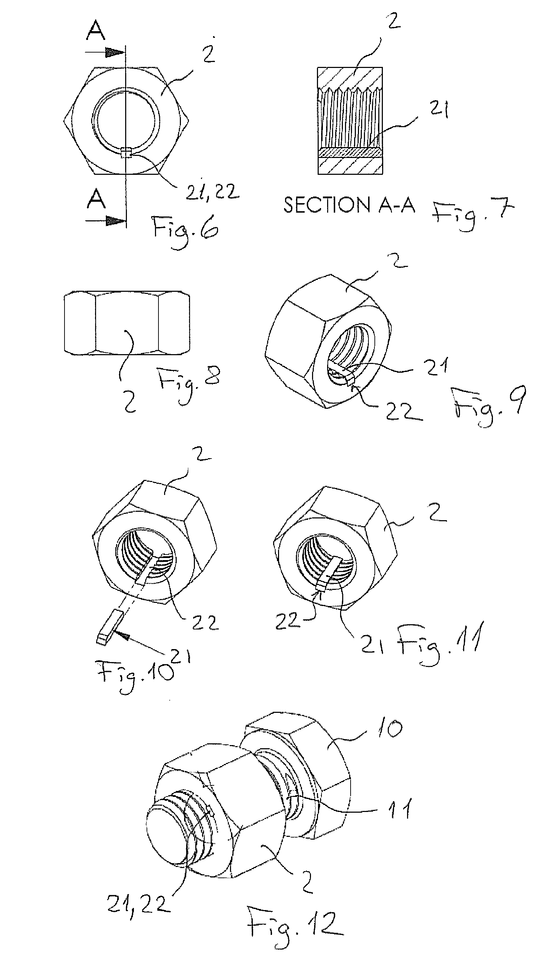

In a second embodiment shown in figures 6 to 12, the threaded shaft 11 is uninterrupted but the locking means are provided in the nut member 2. A recess 22 is provided axially in the inner threading of the bore of the nut member 2. This recess 22 accommodated a material strip 21 of polymeric material, such as nylon, rubber or the like or any other suitable material. The self-locking according to this embodiment functions in the similar manner as described above with reference to the first embodiment. The strip 21 is preferably made with an "oversized" cross-section relative to the recess 22 so that the strip 21 is pressed into the recess 21 1 and then retained therein due to the elastic properties of the strip 21 (see e.g. figs. 10 and 11). Alternatively, or in additional to this, the strip 21 may be fixed to the recess 22 by use of an adhesive, such as glue or the like. A nut and bolt assembly according to this second embodiment of the invention is shown in fig. 12.

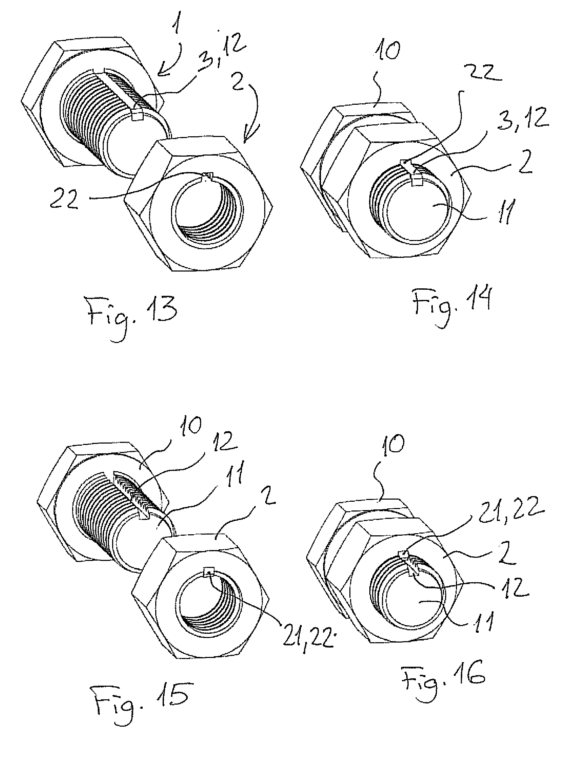

In the figures 13 to 16 two particularly advantageous embodiments are shown. As shown in fig. 13 and 14, according to the third embodiment there is provided a threaded shaft member 1 with a recess 3 in the shaft portion 11 in which a deformable material strip 12 is accommodated like in the first embodiment (see figs. 2-5). The nut member 2 is provided with an axial recess 22 like in the second embodiment. However, there is no deformable material strip therein. This means that when the nut member 2 engages the threaded shaft 11, the deformable strip 3 on the shaft 11 performs the self-locking function. However, as the nut member 2 is turned in the threaded engagement between the inner thread of the bore of the nut member 2 and the outer thread on the shaft 11 on the shaft member 1, the user performing the turning action will get a tactile response for every revolution, i.e. the user can feel every full turn as the nut recess 22 passes the strip carrying recess 12 on the shaft 11. This may be advantageous in relation to threaded assemblies in which an accurate length adjustment is required.

In figures 15 and 16 a fourth embodiment of the invention is shown, which is similar to the third, but where the locking material strip 21 is carried in the nut recess 22 of the nut member 2 and where the recess 12 on the shaft 11 of the shaft member 1 is left without any strip therein. Like in the third embodiment, this means that the user performing the turning action between the nut and shaft member will get a tactile response for every revolution, i.e. the user can feel every full turn as the strip carrying nut recess 22 passes the recess 12 on the shaft 11. This may be advantageous in relation to threaded assemblies in which an accurate length adjustment is required.

In the figures the embodiments are shown with reference to a principle threaded assembly type, such as a nut and bolt assembly with hexagonal bolt head and nuts for turning with a spanner or similar tool engaging the outer surfaces of the nut and/or bolt head. However, by the invention it is realised that other types of threaded assembly types may be used, for instance where the bolt or shaft is engaged at a hexagonal or any other suitable shaped hole at one of the distal ends by a correspondingly shaped tool. Particularly for relatively small diameter length adjustable rod-like members, such as locking pins in a tumbler lock system the present invention is found particularly useful in providing a compact and reliable and precise threaded assembly system. However it is of course realised that the invention has a wide variety of possible uses. For instance depending on the choice of deformable material, the invention can also be used as tamper proof treaded assembly leaving marks on the strip of material if the tread has been tampered with. The invention may be used in relation to both relatively small diameter threaded assemblies as well as larger threaded assemblies. By the term threaded assembly is meant any outer threaded shaft portion engaging an inner thread of a bore in a corresponding member. Accordingly, the invention is not limited to "conventional" nut and bolt assemblies but to all possible threaded assemblies irrespective of area of use and size. Thus, the invention is not limited to the above mentioned examples and variants and equivalents made be provided without departing from the scope of the invention as defined in the accompanying claims.

## Claims

1. A threaded assembly comprising a cylindrical shaft with an externally threaded portion and a nut member having a bore with an internal thread corresponding to the external thread of the shaft,
**characterised in that**
the internal and/or the external thread is provided with an axially oriented retention means.

2. An assembly according to claim 1, wherein the retention means comprises a recess accommodating an insert material, such as a deformable material.

3. An assembly according to claim 1 or 2, wherein both the shaft and the nut member is provided with a shaft and a nut recess, respectively, and the insert material is provided in one of said recesses, i.e. either the shaft recess or the nut member recess.

4. An assembly according to any of claims 1 to 3, wherein the insert material is a polymeric material, such as nylon or the like.

5. An assembly according to any of claims 1 to 3, wherein the insert material is an elastically deformable natural material such as rubber.

6. An assembly according to any of the preceding claims, wherein the recess is an axial groove expanding over the entire length of the threaded portion of the nut member and/or cylindrical shaft.

7. An assembly according to any of the preceding claims, wherein the insert material is a material strip which is sized to fit tightly into the recess.

8. An assembly according to any of the preceding claims, wherein the threaded assembly is an adjustable lock pin.

9. A cylindrical shaft for an assembly according to any of claims 1 to 8, wherein the shaft is provided with an axially oriented recess accommodating an insert material.

10. A nut member for an assembly according to any of claims 1 to 9, wherein the nut member is provided with an axially oriented recess accommodating an insert material.
